(19)

**Europäisches Patentamt**

**European Patent Office**

**Office européen des brevets**

(11) **EP 4 748 213 A1**

(12) **EUROPEAN PATENT APPLICATION**

(43) Date of publication:
27.05.2026 Bulletin 2026/22

(21) Application number: 25209019.6

(22) Date of filing: 16.10.2025

(51) International Patent Classification (IPC):
**A01B 69/00** (2006.01)   **A01B 76/00** (2006.01)
**G06T 7/70** (2017.01)

(52) Cooperative Patent Classification (CPC):
**A01B 69/001; A01B 69/008; A01B 76/00;**
**G06T 7/70;** A01D 43/073; A01D 43/087;
G06T 2207/30252

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **26.11.2024  US 202418961093**

(71) Applicant: **Deere & Company**
**Moline, IL 61265 (US)**

(72) Inventors:
• **O'Connor, Kellen E.**
**Mannheim (DE)**
• **Bauer, Bradley S.**
**Mannheim (DE)**

(74) Representative: **Holst, Sönke**
**John Deere GmbH & Co. KG**
**Mannheim Regional Center**
**Global Intellectual Property Services**
**John-Deere-Strasse 70**
**68163 Mannheim (DE)**

(54) **CAMERA-TO-VEHICLE CALIBRATION AND CONTROL SYSTEM USING AN INERTIAL MEASUREMENT UNIT AND VEHICLE MOTION**

(57)     An inertial measurement unit (IMU) is fixed in a known transformation relative to a vision system sensor. The IMU in vision system sensor are mounted to an agricultural machine. The agricultural machine is controlled to move and the orientation of the vision system sensor, relative to a reference point on the agricultural machine, is generated based upon an IMU signal generated by the IMU during the motion. The orientation is then used to control the agricultural machine.

FIG. 1

EP 4 748 213 A1

# EP 4 748 213 A1

**Description**

FIELD OF THE DESCRIPTION

The present description generally relates to agricultural machines that have a vision system sensor, such as a camera, a RADAR sensor, a LIDAR sensor, mounted to them. More specifically, but not by limitation, the present description relates to detecting an orientation of the vision system sensor relative to a reference point on the vehicle.

BACKGROUND

There are a wide variety of different types of agricultural equipment. Some such agricultural equipment includes agricultural harvesters, material transfer vehicles, haulage vehicles, tender vehicles, other container vehicles, and other items. Agricultural harvesters often engage crop and process that crop and unload that crop into a material transfer vehicle, such as a tractor-pulled grain cart (for example). Once the grain cart is filled to a desired fill level, the material transfer vehicle transfers the harvested material to a container, such as a semi-trailer or other haulage vehicle. The material transfer vehicle positions an unloading spout or auger, pulls alongside the semi-trailer, and then engages the unloading auger to unload harvested material into the semi-trailer.

In other examples, a tender vehicle may approach a target vehicle, and load a commodity from the tender vehicle into the target vehicle. In doing so, the tender vehicle and the target vehicle must be controlled to position themselves in a desired location relative to one another to avoid spillage. Even a momentary misalignment between a vehicle that is transferring material and a vehicle that is receiving that material, can result in hundreds of kilograms of harvested material or other commodity dumped on the ground rather than in the material receiving vehicle.

It can be difficult for operators to accurately position the vehicles relative to one another and to know when a desired amount of material has been transferred. Therefore, some such vehicles include vision system sensors, such as cameras, stereo cameras, LIDAR sensors, RADAR sensors, etc. The vision system sensors can generate a signal indicative of a captured image or other sensed object and that signal can be used to control the vehicles or perform other control operations.

The discussion above is merely provided for general background information and is not intended to be used as an aid in determining the scope of the claimed subject matter.

SUMMARY

An inertial measurement unit (IMU) is fixed in a known orientation relative to a vision system sensor. The IMU and vision system sensor are mounted to an agricultural machine. The agricultural machine is controlled to achieve motion and the orientation of the vision system sensor, relative to a reference point on the agricultural machine, is generated based upon an IMU signal generated by the IMU during the motion. The orientation is then used to control the agricultural machine.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

BRIEF DESCRIPTION OF THE DRAWINGS

FIG. 1 is a partial pictorial partial block diagram of an agricultural system.
FIG. 2 is a partial pictorial partial block diagram of an agricultural system.
FIG. 3 is a partial pictorial partial block diagram of an agricultural system.
FIG. 4 is a partial pictorial partial block diagram of an agricultural system.
FIG. 5 is a partial pictorial partial block diagram of an agricultural system.
FIG. 6 is a block diagram showing one example of a calibration and control system in more detail.
FIG. 7 is a flow diagram illustrating one example of the operation of the calibration and control system in identifying an orientation of a vision system sensor relative to a reference point on an agricultural vehicle.
FIG. 8 is a flow diagram illustrating one example of identifying an orientation of a vision system sensor in more detail.
FIG. 9 is a flow diagram illustrating one example of identifying an orientation of a vision system sensor in more detail.
FIG. 10 is a flow diagram illustrating one example of identifying an orientation of a vision system sensor in more detail.
FIG. 11 is a flow diagram illustrating one example of identifying an orientation of a vision system sensor in more detail.

FIG. 12 is a flow diagram illustrating one example of identifying an orientation of a vision system sensor in more detail.

FIG. 13 is a block diagram showing one example of the calibration and control system illustrated in FIG. 6, deployed in a remote server environment.

FIGS. 14, 15, and 16 are block diagrams showing examples of mobile devices that can be used in the architectures and systems shown in other figures.

FIG. 17 is a block diagram showing one example of a computing environment that can be used in the architectures and systems shown in other figures.

## DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, there are many different agricultural vehicles that have a vision system sensor (such as a camera, a stereo camera, a LIDAR sensor, a RADAR sensor, etc.) mounted to the agricultural machine. In order to use the images captured by the vision system sensor to control an operation of the agricultural machine, the orientation of the vision system sensor relative to a reference point on the agricultural machine (where the location and orientation of the reference point is known in a coordinate system corresponding to the agricultural machine) must be identified.

Currently, in order to identify the orientation of the vision system sensor, relative to the coordinate system of the agricultural machine, a calibration operation is performed. In one calibration operation, the vehicle is positioned so that the vision system sensor is pointed at an area. A point cloud is calculated based on an image captured by the vision system sensor, in order to calculate the pitch and roll angles of the vision system sensor relative to the known coordinate system of the agricultural vehicle. Then, in order to obtain the yaw angle, the vehicle is moved and features in the images captured by the image system sensor are tracked to calculate how the vision system sensor is traveling through space relative to the motion of the agricultural vehicle. A current calibration system performs a plane fitting algorithm to obtain the pitch and roll angles and uses visual odometry to obtain the yaw angle. For purposes of the present description and by way of example, the term "pitch" is the rotation of the sensor about a side-to-side axis of the sensor. The "roll" is the rotation of the sensor about a front-to-back axis of the sensor, and the "yaw" is rotation of the sensor about the vertical (top-to-bottom) axis of the sensor.

Such a calibration procedure can be error prone and depends on many criteria, such as the lighting, the things that the vision system sensor is looking at in its field of view (and tracking to perform the visual odometry), whether the vision system sensor is clean, and/or stereo information captured by stereo cameras, among other things.

Therefore, the present description describes a system that detects the three-dimensional orientation of a vision system sensor on an agricultural machine, where the vision system sensor includes a corresponding inertial measurement unit (IMU) that has a fixed, known transformation relative to the vision system sensor. The pitch and roll angles of the vision system sensor can be computed or detected by observing the gravity vector with respect to the three-axis IMU.

In one example, to obtain the yaw angle the agricultural vehicle can be accelerated in a straight line, on flat ground (or on tilted or sloped ground where the tilt or slope of the ground is considered), and observing the average acceleration vector generated by the IMU as the vehicle accelerates in a straight line. The average acceleration vector can be projected onto the planes defined by the different axes of the IMU in order to obtain the yaw angle.

In another example, the vision system sensor and IMU are mounted on a movable element on the agricultural vehicle (such as on a pivotable spout or another movable element). The pitch and roll angles are again computed by observing the gravity vector with respect to the three-axis IMU and the yaw angle is computed by moving the movable element on which the vision system sensor and IMU are mounted and observing the acceleration impulse generated by the IMU at the start and end of the movement.

In yet another example, the vehicle can be controlled to move in a relatively constant motion and the average pitch and roll angles can be computed over a time period with the movable element in a first position, as well as with the movable element in a second position. The yaw value can be computed based upon the average pitch and roll angles computed when the element is in the first position, and when the element is in the second position.

Thus, the present description describes a system in which the orientation of the vision system sensor can be detected relative to a reference point in a coordinate system corresponding to the agricultural vehicle, without using plane fitting or visual odometry, and thus the orientation can be computed in a more accurate and less error prone manner.

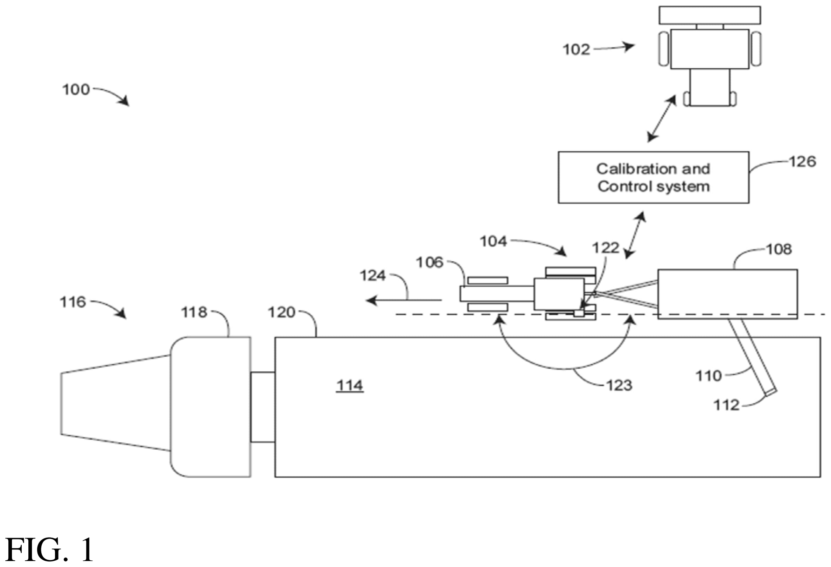

FIG. 1 is a partial pictorial, partial block diagram of one example of an agricultural system 100 in which a harvester 102 (e.g., a combine harvester) is harvesting material from a field. A material transfer vehicle (or transfer vehicle) 104 includes a propulsion vehicle (such as a tractor) 106 that is providing propulsion to (e.g., towing) a grain cart 108. The grain cart 108 illustratively has a spout 110 that includes an auger that transfers material from the grain cart 108 up through spout 110 and out an outlet end 112 of spout 110 into a receiving area 114 of a haulage vehicle 116. Spout 110 may have a flap mounted on the outlet end 112 to control the trajectory of material exiting spout 110. In the example shown in FIG. 1, haulage vehicle 116 includes a semi-truck that has a semi-tractor 118 coupled to a semi-trailer 120.

In operation, grain cart 108 of transfer vehicle 104 may receive harvested material from harvester 102 while harvester 102 is harvesting in the field or while harvester 102 is stationary. When grain cart 108 is filled (or when the harvester 102 is unloaded) transfer vehicle 104 moves into position adjacent haulage vehicle 116 so that the spout 110 can be positioned over the receiving area 114 of haulage vehicle 116 in order to transfer material from grain cart 108 to receiving area 114 of haulage vehicle 116.

In one example, transfer vehicle 104 has a vision system sensor 122 which may be a stereo camera, a LIDAR sensor, a RADAR sensor, etc., that has a field of view indicated by dashed line 123 (or another field of view) that captures an image of haulage vehicle 116. For instance, vision system sensor 122 can be a stereo camera that captures one or more images of haulage vehicle 116 along with an image processing system that processes the images to identify parts of haulage vehicle 116 (e.g., the edges or bounds of receiving area 114, the profile of haulage vehicle 116 as transfer vehicle 104 approaches haulage vehicle 116, the inside of receiving area 114, etc.). The part of haulage vehicle 116 that is identified in the images captured by vision system sensor 122 can be localized to a coordinate system corresponding to material transfer vehicle 104 so that the location of receiving area 114 (e.g., the edges or bounds of receiving area 114) can be identified relative to the location of the outlet end 112 of spout 110. Based upon the location of outlet end 112 of spout 110 relative to receiving area 114, a control system on material transfer vehicle 104 (or elsewhere) can then control the steering and propulsion subsystems of tractor 106 in order to automatically move material transfer vehicle 104 in the direction indicated by arrow 124 into a desired location relative to haulage vehicle 116 so that the harvested material in grain cart 104 can be unloaded into receiving area 114 of haulage vehicle 116.

In order to perform control based upon the images captured by vision system sensor 122, the orientation of vision system sensor 122 must be known relative to a reference point on material transfer vehicle 104 (e.g., a point that has a known location and/or orientation within the coordinate system corresponding to material transfer vehicle 104). Therefore, in one example, vision system sensor 122 has an inertial measurement unit (IMU), such as an accelerometer or other IMU, mounted to it in a known, fixed relationship or transformation relative to the image system sensor 122. Calibration and control system 126 uses the readings generated by the IMU to calculate the pitch and roll angles of vision system sensor 122 within the coordinate system corresponding to material transfer vehicle 104. Then, material transfer vehicle 104 (or a portion thereof, such as spout 110) is moved so that calibration and control system 126 can compute the yaw angle of vision system sensor 122 within the coordinate system corresponding to material transfer vehicle 104. In the example shown in FIG. 1, tractor 106 is accelerated, on flat ground or where the angle of the terrain can be accounted for, in a constant direction to obtain the yaw angle. The three-dimensional orientation of the vision system sensor 122 can then be used by other control systems to control unloading of material from grain cart 108 into semi-trailer 120, or to perform other control operations.

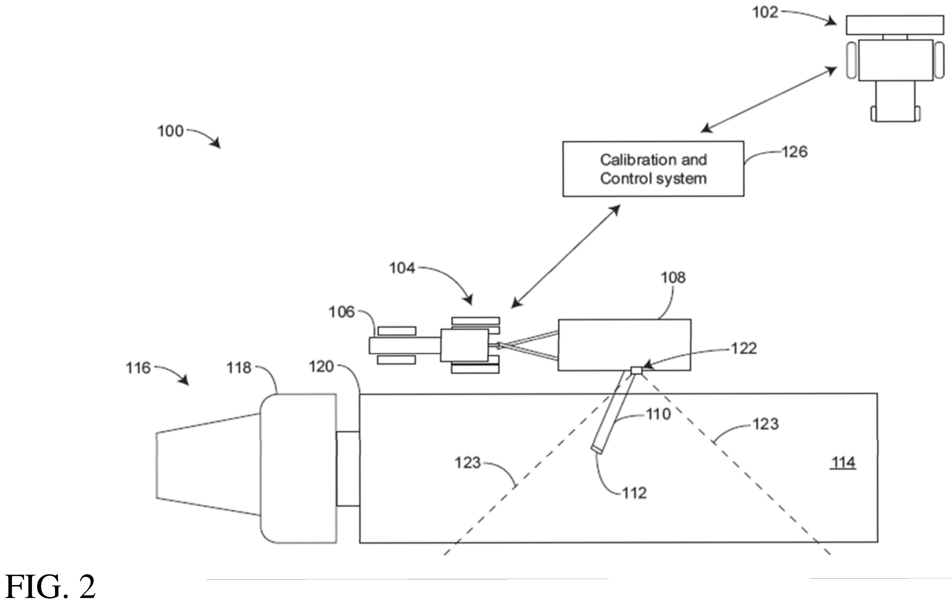

FIG. 2 is similar to FIG. 1, and similar items are similarly numbered. However, FIG. 2 shows that the vision system sensor 122 and corresponding IMU are now mounted on grain cart 108, instead of on tractor 106. Therefore, in order for calibration and control system 126 to compute the yaw angle, grain cart 108 is accelerated in a relatively straight line on level terrain (or where the slope of the terrain can be accounted for).

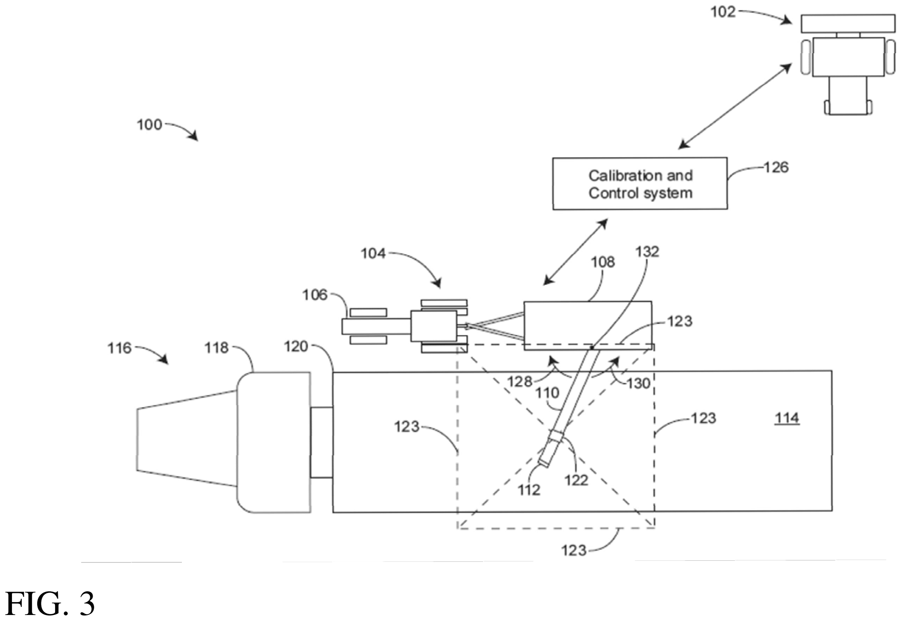

FIG. 3 is similar to FIG. 2, and similar items are similarly numbered. However, FIG. 3 shows that the vision system sensor 122 and corresponding IMU are now mounted on the spout 110. Spout 110 is illustratively pivotable or swingable in the direction indicated by arrows 128 and 130, about a pivot axis 132. Therefore, in one example, calibration and control system 126 can detect the IMU readings to calculate the pitch and roll angles of vision system sensor 122, and then monitor the IMU readings when spout 110 is swung between a stowed position and a deployed position (e.g., in the direction indicated by arrows 128 and/or 130). By detecting the acceleration impulses generated by the IMU at the beginning and ending of the swing motion, calibration and control system 126 can calculate the yaw angle of vision system sensor 122.

In yet another example, material transfer vehicle 104 can be moved at a constant rate with spout 110 in the stored position and calibration and control system 126 can detect the average acceleration readings generated by the IMU with spout 110 in the stored position. Calibration and control system 126 can then calculate pitch and roll angles based upon those IMU readings. Then, spout 110 can be moved to a first known position (such as the deployed position shown in FIG. 3) and again calibration and control system 126 can monitor the average IMU readings for a time period while material transfer vehicle 104 travels with spout 110 in the deployed position. Calibration and control system 126 can calculate the pitch and roll angles of vision system sensor 122 based upon the average acceleration readings detected with spout 110 in the first known position. Then, based upon the pitch and roll angles calculated for vision system sensor 122 with spout 110 in the stowed position and with spout 110 in the deployed position, the yaw angle of vision system sensor 122 can be calculated as well. There are a variety of different algorithms that can be used to calculate the yaw angle. Such algorithms are used to find relative rotations between sets of pitch and roll angles, and the relative rotations are indicative of the yaw angle.

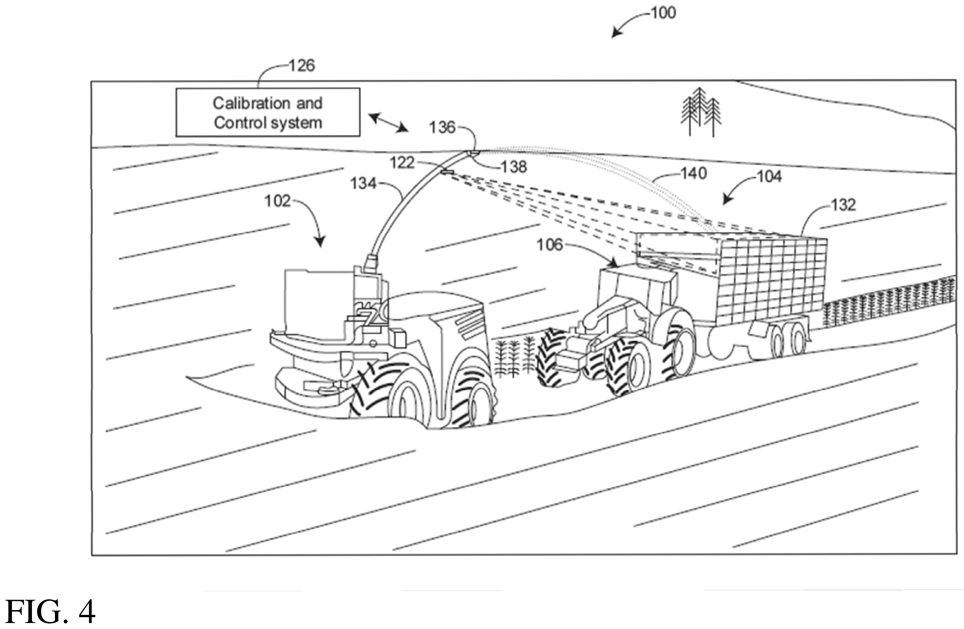

FIG. 4 is similar to FIGS. 1-3, and similar items are similarly numbered. However, in the agricultural system 100 of FIG. 4, harvester 102 is a self-propelled forage harvester and material transfer vehicle 104 includes a tractor 106 that pulls a material receiving wagon 132. Self-propelled forage harvester 102 has a spout 134 that can be pivoted or movable about one or more different axes and an outlet end 136 that may have a controllable flap 138 for controlling the trajectory of material 140 as it exits the outlet end 136 of spout 134. FIG. 4 also shows that agricultural system 100 includes a vision system sensor 122 that is mounted on spout 134 and that has a corresponding IMU that is mounted to vision system sensor 122 with a known, fixed transformation relative to vision system sensor 122.

Therefore, in order to perform control operations, the three-dimensional orientation of vision system sensor 122 relative to a reference point on self-propelled forage harvester 102 must be computed. Thus, calibration and control system 126 can compute the three-dimensional orientation of vision system sensor 122 in the same ways as described with respect to FIGS. 1-3 above. That is, harvester 102 can be accelerated in a straight line on level ground (or on sloped ground where the slope can be accounted for) and calibration and control system 126 can monitor the readings output by the IMU on vision system sensor 122 to calculate the pitch, roll, and yaw angles in the coordinate system corresponding to harvester 102. In another example, harvester 102 can be stationery and spout 134 can be controlled to move from a first position to a second position. Calibration and control system 126 can be used to detect the acceleration impulses during the start and end of the motion of spout 134 and use those acceleration impulses to calculate the yaw of vision system sensor 122 relative to the coordinate system corresponding to harvester 102.

In yet another example, harvester 102 can be controlled to move at a relatively constant rate in a straight line and spout 134 can be controlled to move to a first known position in the coordinate system of harvester 102 for a first period of time. During the first period of time, calibration and control system 126 can detect the average acceleration vector generated by the IMU on vision system sensor 122 to calculate pitch and roll angles of vision system sensor 122 when spout 134 is in the first known position. Spout 134 can then be controlled to move to a second known position in the coordinate system of harvester 102 for a second time period. During that second time period, calibration and control system 126 detects the average acceleration vectors generated by the IMU in vision system sensor 122 and calculates the pitch and roll angles of vision system sensor 122 when spout 134 is in the second position. Based upon the pitch and roll angles when spout 134 is in the first known position and the pitch and roll angles when spout 134 is in the second known position, calibration and control system 126 can compute the yaw angle of vision system sensor 122 by finding the relative rotations between the sets of pitch and roll angles.

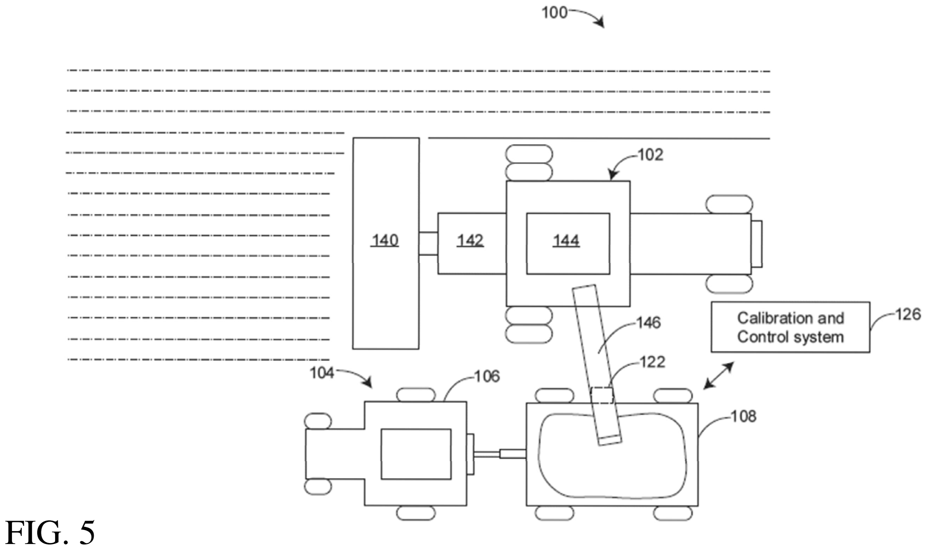

FIG. 5 is a partial pictorial, partial block diagram of another agricultural system 100, and some items shown in FIG. 5 are similar to those shown in previous figures, and they are similarly numbered. FIG. 5 shows that harvester 102 is a combine harvester that has a header 140, a feeder house 142, a clean grain tank 144, and a spout 146. Combine harvester 102 engages crop in a field with header 140, processes that crop through feeder house 142 and other processing elements, and moves the harvested material into clean grain tank 144. The harvested material is transferred from clean grain 144 through spout 146 into grain cart 108. FIG. 5 shows that spout 146 has a vision system sensor 122 with a corresponding IMU. Thus, in order to perform control operations based on images captured by vision system sensor 122, calibration and control system 126 first identifies the three-dimensional orientation of vision system sensor 122 relative to a reference point in a coordinate system corresponding to harvester 102. Calibration and control system 126 can find the three-dimensional orientation of vision system sensor 122 relative to the coordinate system of harvester 102 in similar ways to those described above. Therefore, spout 146 can be held in a fixed position while harvester 102 accelerates in a straight line on level ground, or on sloped ground where the slope can be accounted for. Calibration and control system 126 can calculate the pitch, roll, and yaw angles based upon the IMU readings.

In another example, agricultural harvester 102 can move at a constant speed in a straight line. Calibration and control system 126 can detect the average IMU readings over a first period of time with spout 146 in a first known position and calculate the pitch and roll angles corresponding to the vision system sensor 122, with spout 146 in the first known position, based on those IMU readings. Then, spout 146 can be moved to a second known position and calibration and control system 126 can detect the average IMU readings for a period of time with spout 146 in the second known position. Calibration and control system 126 can calculate the pitch and roll angles of vision system sensor 122 when spout 146 is in the second known position based upon the IMU readings. Calibration and control system 126 can then calculate the yaw angle of vision system sensor 122 based upon the pitch and roll angles with spout 146 in the first known position and based upon the pitch and roll angles with spout 146 in the second known position.

In another example, harvester 102 can be stationary and spout 146 can be rotated between a first, known position and a second, known position. Calibration and control system 126 can calculate the pitch and roll angles based upon the IMU readings and can calculate the yaw angle based upon the acceleration impulses generated by the IMU during the beginning and ending of the motion of spout 146 as it is moved between the first and second positions.

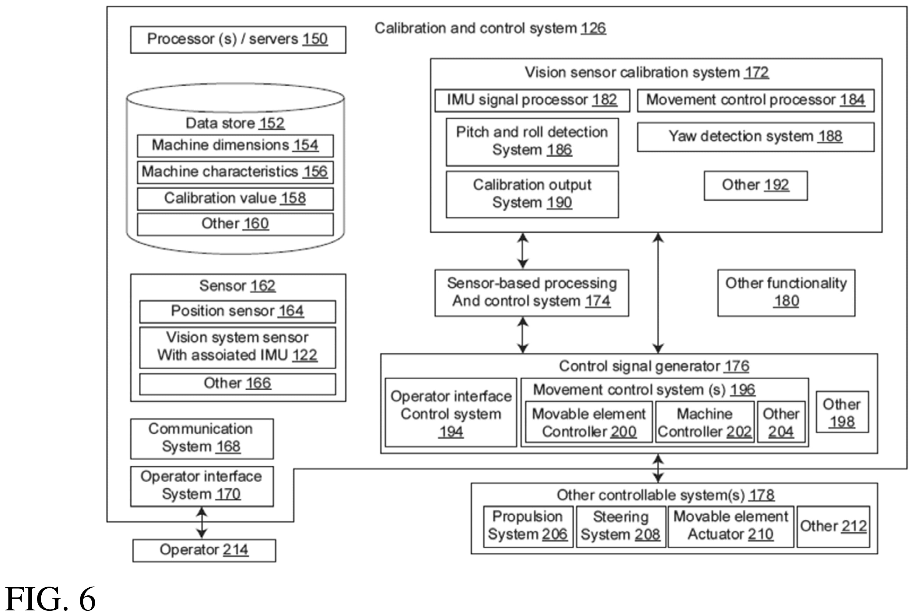

FIG. 6 is a block diagram showing one example of calibration and control system 126 in more detail. In the example shown in FIG. 6, calibration and control system 126 includes one or more processors or servers 150, data store 152 (which, itself, stores machine dimensions 154, machine characteristics 156, one or more calibration values 158, and other items 160), one or more sensors 162 (which can include a position sensor 164, vision system sensor with an associated IMU 122, and other sensors 166), communication system 168, operator interface system 170, vision sensor calibration system 172, sensor-based processing and control system 174, control signal generator 176, other controllable systems 178, and other functionality 180. Vision sensor calibration system 172 can include IMU signal processor 182, movement control processor 184, pitch and roll detection system 186, yaw detection system 188, calibration output system 190, and other items 192. Control signal generator 176 can include operator interface control system 194, movement control system 196, and other items 198. Movement control system 196 can include moveable element controller 200, machine controller 202, and other items 204. Other controllable systems 178 can include propulsion system 206, steering system 208, moveable element actuator 210, and other items 212. FIG. 6 also shows that an operator 214 may have access to operator interface system 170. Operator 214 may be a human operator, an automated operator, or a semi-automated operator. By "automatic" it is meant, in one example, that an operation or function is performed without further human involvement, except perhaps to initiate or authorize the operation or function. Before describing the operation of calibration and control system 126 in more detail, a description of some of the items in calibration and control system 126 will first be provided.

Machine dimensions 154 may include the dimensions of various items on the machine that vision system sensor 102 is mounted on. For instance, the machine dimensions 154 may include the measurements of the machine between the location of vision system sensor 122 and the reference point (e.g., the direction and distance to a GPS receiver, or other reference point on the machine). Machine characteristics 156 may define other characteristics of the machine on which vision system sensor 122 is mounted. For instance, where vision system sensor 122 is mounted to a moveable element (such as a spout or other moveable element), then machine characteristics 156 may identify the path of motion or swing path or other kinematic information defining the movement of the moveable element. Calibration value 158 may define the three-dimensional orientation of vision system sensor 122 in the coordinate system corresponding to the machine on which vision system sensor 122 is mounted. Thus, calibration value 158 may define the pitch, roll, and yaw angles of vision system sensor 122 (relative to the coordinate system of the machine) in one or more different positions.

Position sensor 164 illustratively senses the position of position sensor 164 in a global or local coordinate system. Therefore, position sensor 164 may be a global navigation satellite system (GNSS) receiver, a dead reckoning system, a cellular triangulation system, or any of a wide variety of other position sensors.

Vision system sensor 122 with an associated IMU can be a camera, a stereo camera, a LIDAR sensor, a RADAR sensor, or another type of vision system sensor. The IMU is connected to the vision system sensor fixedly, with a known transformation. Thus, when the vision system sensor moves, the associated IMU also moves in a known way relative to the vision system sensor.

Communication system 168 illustratively facilitates communication of the items on calibration and control system 126 with one another and may facilitate communication with other machines or other systems over a network. Thus, communication system 168 may be a controller area network (CAN) bus and bus controller, a cellular communication system, a Bluetooth, Wi-Fi or near field communication system, a wide area network communication system, a local area network communication system, or any of a wide variety of other communication systems or combinations of systems.

Operator interface system 170 includes operator interface mechanisms that can be used to provide outputs to operator 214 and receive inputs from operator 214. Therefore, the operator interface mechanisms can include steering wheels, pedals, linkages, joysticks, knobs, buttons, a display screen, a microphone, speakers, and/or other mechanisms that can provide audio, visual, and/or haptic outputs to operator 214 and that may receive inputs from operator 214. Thus, a display screen may display operator actuatable mechanisms such as icons, links, buttons, etc. that may be actuated by operator 214 using a point and click device, using touch gestures, using voice inputs, etc.

Vision sensor calibration system 172 can automatically conduct a calibration operation, or can prompt operator 214 to provide inputs to conduct a calibration operation. Based on the calibration operation, vision sensor calibration system 172 generates a calibration value 158 which defines the three-dimensional orientation of vision system sensor 122 in a coordinate system corresponding to the vehicle on which vision system sensor 122 is mounted. IMU signal processor 182 receives and processes the IMU signals from the IMU associated with vision system sensor 122. Movement control processor 184 generates an output identifying the different machine motions that are to be performed in order to conduct the calibration operation. For instance, where the machine on which sensor 122 is mounted is to accelerate in a straight line on flat ground, then movement control processor 184 can detect whether the machine is on flat ground (such as using the output from position sensor 164) and generate an output on operator interface system 170 prompting operator 214 to accelerate the machine for a defined interval or distance. In another example, movement control processor 184 can provide an output to control signal generator 176 which, itself, generates a control signal to control the propulsion system 206 and steering system 208 on the machine to which sensor 122 is mounted in order to accelerate that machine in a desired direction and for a desired time period. Movement control processor 184 can also generate an output to control the movement of a moveable element (e.g., a spout or other moveable element) on which vision system sensor 122 is mounted, in order to perform calibration. Thus, movement control processor 184 can generate an output that controls operator interface system 170 to prompt operator 214 to move the moveable element to a desired position, or generate an output to control signal generator 176 to have control signal generator 176 automatically generate a control signal to move the moveable element. Movement control processor 184 can generate other outputs to control other machine movement as well.

Pitch and roll detection system 186 receives an input from the IMU associated with vision system sensor 122 and calculates pitch and roll angles based upon that output. Yaw detection system 188 can receive various inputs (such as the inputs from the IMU associated with sensor 122, the pitch and roll angles calculated by pitch and roll detection system 186, the orientation of the machine generated from position sensor 164, and/or other inputs) and generate a yaw angle corresponding to the vision system sensor 122. Calibration output system 190 can receive the pitch and roll angles and the yaw angle and generate an output indicative of the calibration value 158 that defines the three-dimensional orientation of vision system sensor 122 in the coordinate system for the machine on which sensor 122 is mounted. That calibration value 158 can also be used by a sensor-based processing and control system 174 to perform machine control. For instance, where the output from the vision system sensor 122 is used to control an unloading operation, then the calibration value 158 will be used by the sensor-based processing and control system 174 in order to control the unloading operation.

Operator interface control system 194 generates control signals to control operator interface system 170. For instance, the operator interface control system 194 can generate control signals to control the operator interface system 170 to prompt operator 214 to control the machine so that a calibration operation can be performed. Operator interface control system 194 can be used to control operator interface system 170 in other ways as well.

Movement control system 196 generates control signals to control the movement of the machine and moveable elements on the machine so that a calibration operation can be performed. Moveable element controller 200 thus generates a control signal to control a moveable element actuator 210 which is actuated to control movement of a moveable element (such as a spout or other moveable element on which visual system sensor 122 is mounted). The moveable element actuator 210 may thus control the spout to swing from a storage position to a deployed position or to move in other ways as well. Machine controller 202 can generate a control signal to control the propulsion system 206 and/or steering system 208 in order to control machine motion (e.g., to accelerate the machine in a desired direction for a desired amount of time, or to control the machine to move at a relatively constant velocity in a desired direction for a desired amount of time, etc.)

Propulsion system 206 can be an internal combustion engine, a hydraulic motor, an electric motor, a transmission or drive train, a direct drive output coupling a motor to a ground engaging element (such as a wheel or track), or other propulsion system. Steering subsystem 208 can include a steering linkage that is used to control steering of the ground engaging elements, or a skid steer control system that is used to control the ground engaging elements in a skid steer fashion. Moveable element actuator 210 can be a hydraulic actuator, a pneumatic actuator, an electric or electromechanical actuator, or any of a wide variety of other actuators that can be actuated to drive movement of a moveable element (such as a spout or other moveable element).

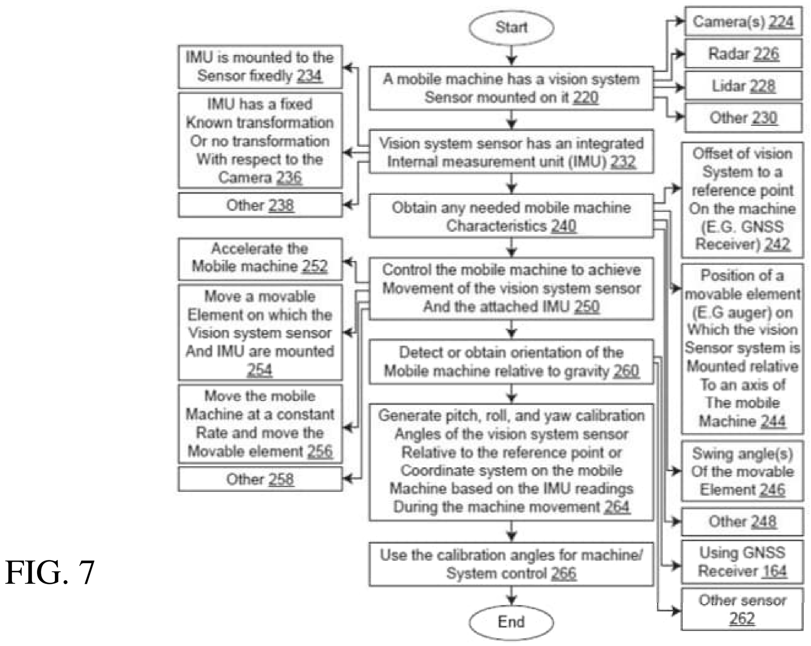

FIG. 7 is a flow diagram illustrating one example of the operation of calibration and control system 126 in defining the three-dimensional orientation of vision system sensor 122 in the coordinate system of the machine on which sensor 122 is mounted. It is first assumed that a mobile machine has a vision system sensor 122 mounted on it, as indicated by block 220 in the flow diagram of FIG. 7. The vision system sensor 122 may be one or more cameras 224, a RADAR sensor 226, a LIDAR sensor 228, or any of a variety of other sensors 230. It is also assumed that the vision system sensor 122 has an integrated inertial measurement unit (IMU) as indicated by block 232 in the flow diagram of FIG. 7. The IMU is mounted to the sensor 122 fixedly, as indicated by block 234, so that the IMU has either no transformation (e.g., it is mounted closely adjacent sensor 122) or a fixed, known transformation with respect to the camera or other vision system sensor 122 as indicated by block 236. The vision system sensor may be integrated with an IMU in other ways as well, as indicated by block 238.

The vision sensor calibration system 172 then obtains any needed mobile machine dimensions or characteristics, as indicated by block 240. Such characteristics or dimensions may include the offset of the vision system sensor 122 to a reference point on the machine (e.g., the direction and distance to a GNSS receiver) as indicated by block 242. The machine dimensions or characteristics may include the position of a moveable element (such as an auger or spout) on which the vision system sensor 122 is mounted, relative to an axis of the mobile machine, or relative to another reference point on the mobile machine, as indicated by block 244. The mobile machine characteristics or dimensions may include the swing angle or path of a moveable element, as indicated by block 246 and/or any of a wide variety of other dimensions or characteristics, as indicated by block 248.

Movement control processor 188 then generates an output to control (either automatically, semi-automatically, or to prompt a human operator 214) to control the mobile machine to achieve movement of the vision system sensor 122 and the attached IMU, as indicated by block 250 in the flow diagram of FIG. 7. In one example, the movement is to accelerate the mobile machine in a straight line as indicated by block 252. In another example, the movement may be to move the moveable element on which the vision system sensor 122 and IMU are mounted, as indicated by block 254. In yet another example, the movement may be to move the mobile machine at a constant rate and also move the moveable element (such as to move the moveable element to a first position for a first period of time and then to a second position for a second period of time) as indicated by block 256. The machine movement can be accomplished in other ways as well, as indicated by block 258.

Unless the machine is traveling on flat ground, then vision sensor calibration system 172 obtains the orientation of the mobile machine relative to gravity, as indicated by block 260. The orientation can be obtained, for instance, using a GNSS receiver or other position sensor 164, or using another sensor that senses the orientation of the machine relative to gravity, as indicated by block 262.

Pitch and roll detection system 186 then generates the pitch and roll angles that identify the pitch and roll of vision system sensor 122 relative to the coordinate system of the machine on which it is mounted, and yaw detection system 188 computes or generates the yaw angle of the vision system sensor relative to the reference point or coordinate system on the mobile machine based upon the IMU readings during the machine movement. Calculating the pitch, roll, and yaw angles (the calibration angles) is indicated by block 264 in the flow diagram of FIG. 7. Those calibration angles are also referred to as calibration value 158. The calibration value can then be used for machine control or system control, as indicated by block 266.

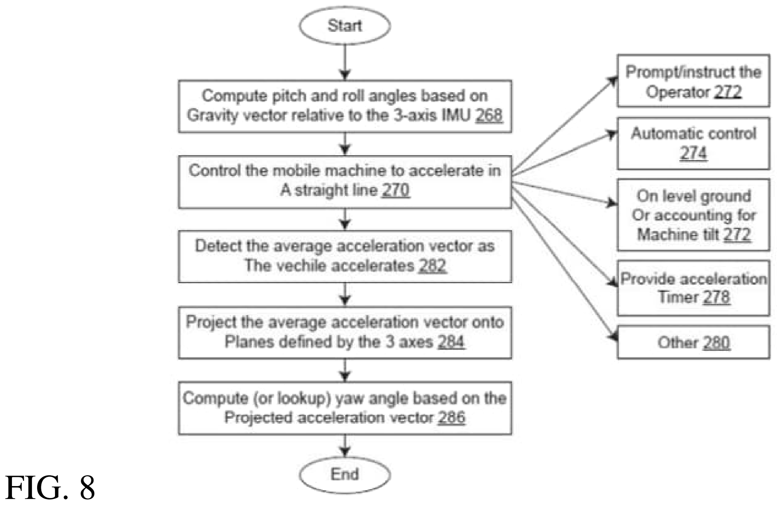

FIG. 8 is a flow diagram showing one example of how the pitch, roll, and yaw angles can be calculated, in more detail. In the example shown in FIG. 8, pitch and roll detection system 186 receives the IMU output and computes the pitch and roll angles based upon the gravity vector relative to the three-axis IMU, as indicated by block 268. Such angles can be computed using known trigonometric functions.

Movement control processor 184 then generates an output for the mobile machine to be controlled to accelerate in a straight line, as indicated by block 270 in the flow diagram of FIG. 8. In one example, movement control processor 184 generates an output to operator interface control system 194 which controls operator interface system 170 to prompt or instruct operator 214 to accelerate the vehicle in a straight line, as indicated by block 272. In another example, movement control processor 184 can provide an output to movement control system 196 which generates an automated control signal to automatically accelerate the vehicle, as indicated by block 274. The acceleration may be performed either on level ground or on a tilted or sloped ground, so long as the slope or tilt can be accounted for, as indicated by block 276. For instance, if position sensor 164 provides an output indicative of the slope or tilt or other orientation of the machine on which it is mounted, then the acceleration can be performed, accounting for that slope or tilt. Also, in one example, the acceleration may be performed for a given time interval, and therefore an acceleration timer can be generated, as indicated by block 278. The acceleration timer can be displayed for operator 214, or used for automated acceleration, or used in other ways. The mobile machine can be accelerated in other ways as well, as indicated by block 280.

Yaw detection system 188 detects the average acceleration vector output by the IMU as the vehicle accelerates. Detecting the average acceleration vector is indicated by block 282 in the flow diagram of FIG. 8. That acceleration vector is then projected onto the planes defined by the three axes of the three-axis IMU. Projecting the acceleration vector onto the different planes is indicated by block 284. The yaw angle can then be computed (or looked up using a look-up table) based upon the projected acceleration vector, as indicated by block 286. Thus, the pitch, roll, and yaw angles (the calibration angles) can all be generated and stored as a calibration value 158 and/or output to sensor-based processing and control system 174 and/or control signal generator 176.

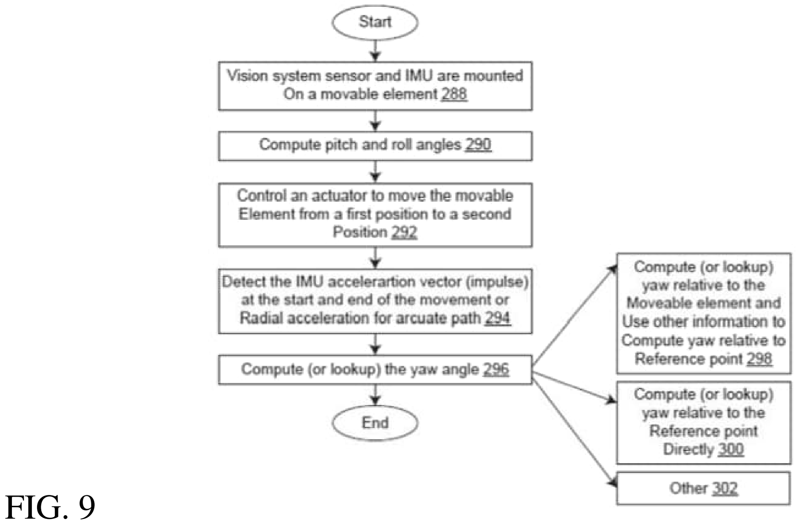

FIG. 9 is a flow diagram showing another example of how the pitch, yaw, and roll angles for the vision system sensor 122 can be obtained. For purposes of the description of FIG. 9, it is assumed that the vision system sensor 122 and IMU are mounted on a moveable element (such as a spout or other moveable element) on the mobile machine, as indicated by block 288 in the flow diagram of FIG. 9. Pitch and roll detection system 186 then computes the pitch and roll angles based upon the output from the IMU, as indicated by block 290. Again, known trigonometric functions can be used, or other algorithms can be used to calculate the pitch and roll angles.

Movement control processor 184 then generates an output to movement control system 196 to control moveable element actuator 210 to move the moveable element from a first position to a second position, as indicated by block 292. Again, as discussed above, moveable element controller 200 can generate an output to operator interface system 170 which instructs operator 214 to move the moveable element, or moveable element controller 200 can generate a control signal to control moveable element actuator 210 to automatically move the moveable element from the first position to the second position.

When the moveable element is moved from the first position to the second position, IMU signal processor 182 detects the IMU acceleration vector (or impulse) at the start and at the end of the movement of the moveable element. The movable element may be moved in an arcuate path in which case the IMU may detect the radial acceleration along the arcuate path traveled by the moveable element. Detecting the IMU acceleration vector or impulse during movement of the moveable element is indicated by block 294 in the flow diagram of FIG. 9.

Yaw detection system 188 can then compute or look up the yaw angle that can be used in the calibration value 158, as indicated by block 296 in the flow diagram of FIG. 9. The yaw is computed or looked up based on the IMU acceleration vector or impulse detected at the beginning and end of the movement or based on the radial acceleration of the moveable element through an arcuate path. In one example, yaw detection system 188 computes or looks up the yaw angle relative to the moveable element (e.g., relative to an elongate axis of the spout on which sensor 122 is mounted) and then uses other information (such as the machine dimensions 154 and/or machine characteristics 156) to transform that yaw angle into a yaw angle relative to the reference point or coordinate system of the machine on which the moveable element is mounted. Computing the yaw angle in this way is indicated by block 298 in the flow diagram of FIG. 9. In another example, yaw detection system 188 computes or looks up the yaw angle relative to the reference point or coordinate system on the vehicle directly, without needing to first compute the yaw angle relative to the moveable element, as indicated by block 300. Yaw detection system 188 can compute or look up the yaw angle in other ways as well, as indicated by block 302 in the flow diagram of FIG. 9.

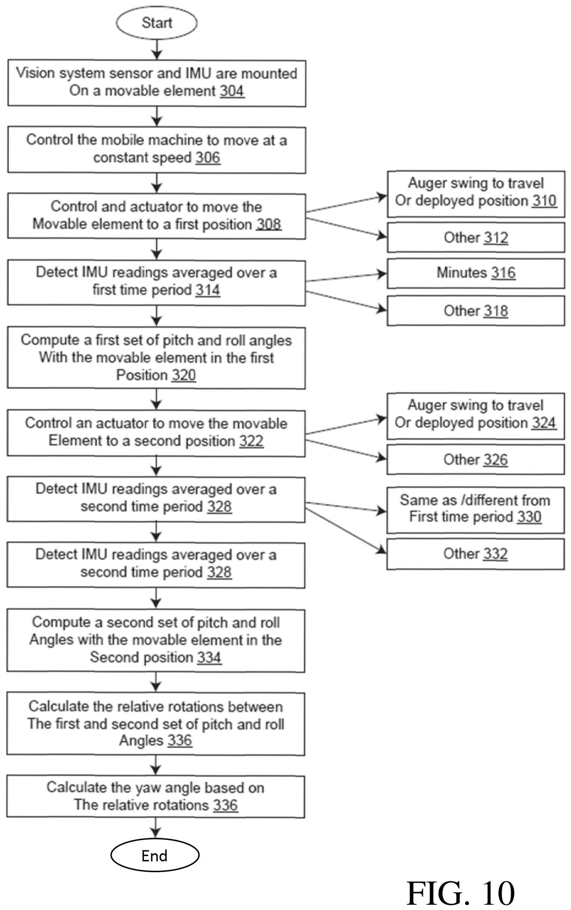

FIG. 10 is a flow diagram illustrating another example of the operation of vision sensor calibration system 172 in detecting and/or generating the calibration value 158. It is assumed that the vision system sensor 122 and IMU are again mounted on a moveable element (such as a spout or other moveable element) on the machine, as indicated by block 304 in the flow diagram of FIG. 10. Movement control processor 184 generates an output so that machine controller 202 controls the mobile machine to move at a relatively constant speed as indicated by block 306. Movement control processor 184 then also generates an output to moveable element controller 200 which generates a control signal to control the moveable element actuator 210 to move the movable element to a first position, as indicated by block 308. For instance, the moveable element actor 210 can be controlled to position the auger in a travel position or in a deployed position, as indicated by block 310. The moveable element can be controlled to move in other ways as well, as indicated by block 312.

IMU signal processor 182 then detects the IMU readings averaged over a first time period, with the moveable element in the first position, as indicated by block 314. The first time period may be a period of minutes, as indicated by block 316, or another time period, as indicated by block 318.

Pitch and roll detection system 186 then calculates a first set of pitch and roll angles with the moveable element in the first position, based upon the averaged IMU readings, as indicated by block 320 in the flow diagram of FIG. 10. Movement control processor 184 then generates an output to control the moveable element actuator 210 (either automatically using moveable element controller 200 or using operator interface control system 194 to prompt operator 214, or in other ways) to move the moveable element to a second position, as indicated by block 322. For instance, if the first position for an auger is a travel position, then the second position may be a deployed position. Moving the moveable element in such a way is indicated by block 324 in the flow diagram of FIG. 10. Moving the moveable element to the second position can be done in other ways as well, as indicated by block 326.

Once the moveable element is in the second position, then IMU signal processor 182 detects the IMU readings averaged over a second time period, as indicated by block 328. The second time period may be the same as the first time period or different from the first time period, as indicated by block 330. The IMU readings can be aggregated over the second time period in other ways as well, as indicated by block 332.

Pitch and roll detection system 186 then computes a second set of pitch and roll angles with the moveable element in the second position, based upon the averaged IMU readings, as indicated by block 334. Based upon the first set of pitch and roll angles and the second set of pitch and roll angles, yaw detection system 188 calculates the relative rotations between he first and second sets of pitch and roll angles, as indicated by block 336. Yaw detection system 188 then uses those relative rotations to calculate the yaw angle, as indicated by block 338. There are a variety of different algorithms that can be used to calculate the relative rotations between the first and second sets of pitch and roll measurements. One such algorithm is referred to as the Prorustes algorithm, but other algorithms that are used to find the relative rotations between sets of measurements can be used as well.

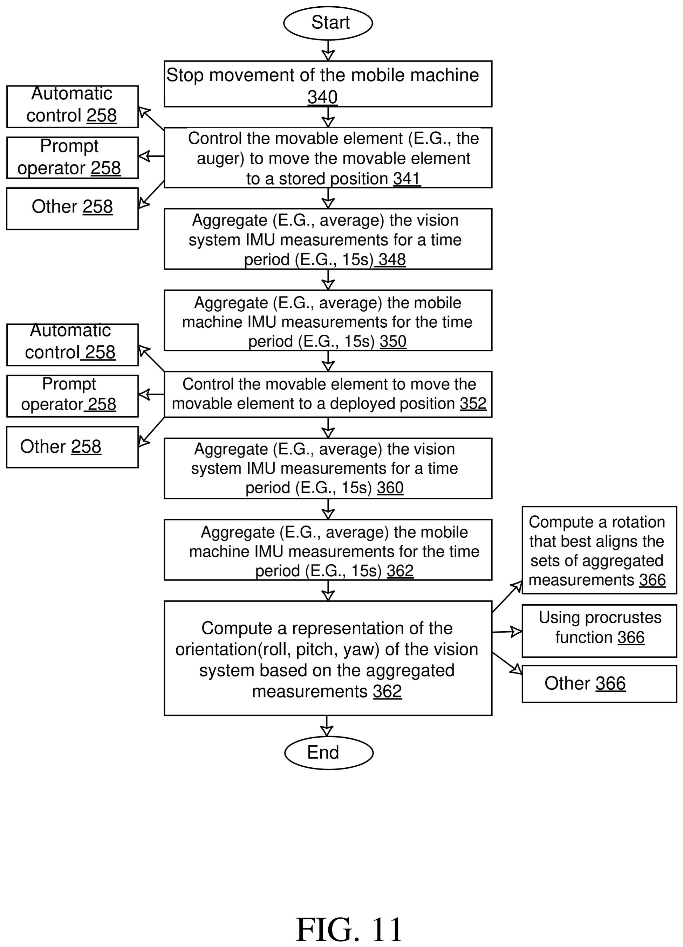

FIG. 11 is a flow diagram showing another example of the operation of calibration and control system 126 in more detail. It is first assumed that the mobile machine for which calibration is being performed is controlled to stop movement (e.g., the mobile machine is parked) as indicated by block 340. Movable element controller 200 then generates a control signal to control movable element actuator 210 to move the movable element to a stored position, as indicated by block 341. In one example, movable element controller 200 can be automatically controlled as indicated by block 342, or operator interface system 170 can generate an interface to prompt operator 214 to move the movable element to the stored position, as indicated by block 344. The movable element can be moved to the stored position in other ways as well, as indicated by block 346.

IMU signal processor 182 then aggregates (e.g., averages) measurements from the vision system IMU 122 for a desired time period (e.g., 15 seconds). Aggregating the vision system IMU measurements is indicated by block 348 and the flow diagram of FIG. 11. IMU signal processor 182 then aggregates (e.g., averages) the measurements from the IMU on position sensor 164 for the time period (e.g., for 15 seconds) as indicated by block 350 in the flow diagram of FIG. 11.

Movable element controller 200 then controls the movable element actuator 210 to move the movable element to a deployed position, as indicated by block 352. Again, movable element controller 200 can automatically control movable element actuator 210, as indicated by block 354, or operator interface system 170 can generate an interface prompting operator 214 to move the movable element, as indicated by block 356. The movable element can be moved to the deployed position in other ways as well, as indicated by block 358

IMU signal processor 182 then aggregates (e.g., averages) the measurements from the vision system IMU 122 for a time period (e.g., for 15 seconds) and aggregates (e.g., averages) the IMU measurements from the position sensor 164 for the time period (e.g., for 15 seconds). Averaging the vision system IMU measurements is indicated by block 360 and averaging the mobile machine IMU measurements (e.g., the IMU measurements provided by position sensor 164) is indicated by block 362 in the flow diagram of FIG. 11.

Vision sensor calibration system 172 then computes a representation of the orientation (the roll, pitch, and yaw angles) of the vision system based upon the aggregated measurements, as indicated by block 364. For instance, vision sensor calibration system 172 may compute a rotation that best aligns the sets of aggregated measurements, as indicated by block 366. In one example, the rotation is computed using the Procrustes function as indicated by block 368, or in other ways, as indicated by block 370.

As one example, the roll, pitch, and yaw representations are calculated for the rotation given by equation 1 below:

Eq. 1 [0079] Procrustes (1st camera IMU average, auger swing*1st mobile machine IMU average, 2nd camera IMU average, 2nd mobile machine IMU average)  Eq. 1

where Procrustes is a function that computes the rotation that best aligns its first argument with its second argument, and best aligns its third argument with its fourth argument. With respect to equation 1 above, this means that the Procrustes function returns the rotation that best aligns the "1st camera IMU average" with the "auger swing*1st mobile machine IMU average" and that best aligns the "2nd camera IMU average" with the "2nd mobile machine I am you average";

where "auger swing" is the rotation of the movable element or auger when it moves from the stored position to the deployed position.

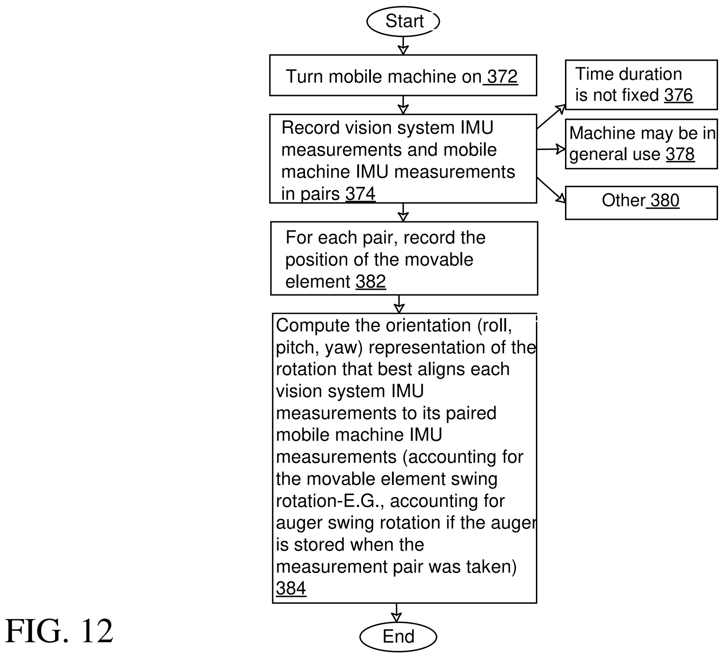

FIG. 12 is a flow diagram illustrating another example of the operation of calibration and control system 126. The example shown in FIG. 12 is similar to that shown in FIG. 11, with some differences. For instance, the duration over which the IMU measurements are taken in the example shown in FIG 12 need not be fixed. Similarly, the IMU measurements need not be performed in any particular order, and the mobile machine may be in general use (e.g., harvesting, unloading, driving on the road, etc.) and need not be parked. Further, the IMU measurements need not be aggregated or averaged, but may be input directly into the Procrustes algorithm in pairs.

Therefore, in the example shown in FIG. 12, the mobile machine is first turned on as indicated by block 372. While the mobile machine is on, IMU signal processor 182 records measurements from the vision system IMU 122 and from the mobile machine IMU provided by position sensor 164, in pairs, as indicated by block 374. As discussed above, the time duration over which the IMU measurements are recorded need not be fixed as indicated by block 376 and the mobile machine may be in general use, as indicated by block 378. The IMU measurements may be stored in data store 152 for further processing or recorded in other ways, as indicated by block 380.

In one example, a pair of measurements may take the following form:

1st camera IMU measurement, first mobile machine IMU measurement

For each pair of IMU measurements, vision sensor calibration system 172 also records the position of the movable element (e.g., whether the auger was in the stored position or in the deployed position when the pair of IMU measurements was recorded). Recording the position of the movable element for each pair of IMU measurements is indicated by block 382 in the flow diagram of FIG 12.

Calibration output system 190 then computes the orientation (roll, pitch, yaw) representation of the rotation that best aligns each vision system IMU measurement to its paired mobile machine IMU measurement, accounting for the movable element swing rotation. That is, the rotation that best aligns each of the paired IMU measurements is computed accounting for the auger swing when the auger was in the stored position when the IMU measurement pair was taken.

For example, over time, enough IMU measurement pairs will be taken in order to compute the orientation of the vision system on the mobile machine using the Procrustes algorithm or using another similar algorithm. The algorithm computes the roll, pitch, and yaw representation of the rotation that best aligns each camera IMU measurement to its corresponding or paired mobile machine IMU measurement. The computation is made, accounting for the position of the movable element when the measurement pair was taken.

It can thus be seen that the present description uses a vision system sensor 122 with a corresponding IMU to calculate pitch, roll, and yaw angles using machine motion and/or moveable element motion. This provides a much more robust calibration system than a system that is based on plane fitting and visual odometry.

The present discussion has mentioned processors and servers. In one example, the processors and servers include computer processors with associated memory and timing circuitry, not separately shown. The processors or servers are functional parts of the systems or devices to which they belong and are activated by, and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing the data stores, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, and/or logic. It will be appreciated that such systems, components, generators, and/or logic can be comprised of hardware items (such as processors and associated memory, or other processing components, some of which are described below) that perform the functions associated with those systems, components, generators, and/or logic. In addition, the systems, components, generators, and/or logic can be comprised of software that is loaded into a memory and is subsequently executed by a processor or server, or other computing component, as described below. The systems, components, generators, and/or logic can also be comprised of different combinations of hardware, software, firmware, etc., some examples of which are described below. These are only some examples of different structures that can be used to form the systems, components, generators, and/or logic described above. Other structures can be used as well.

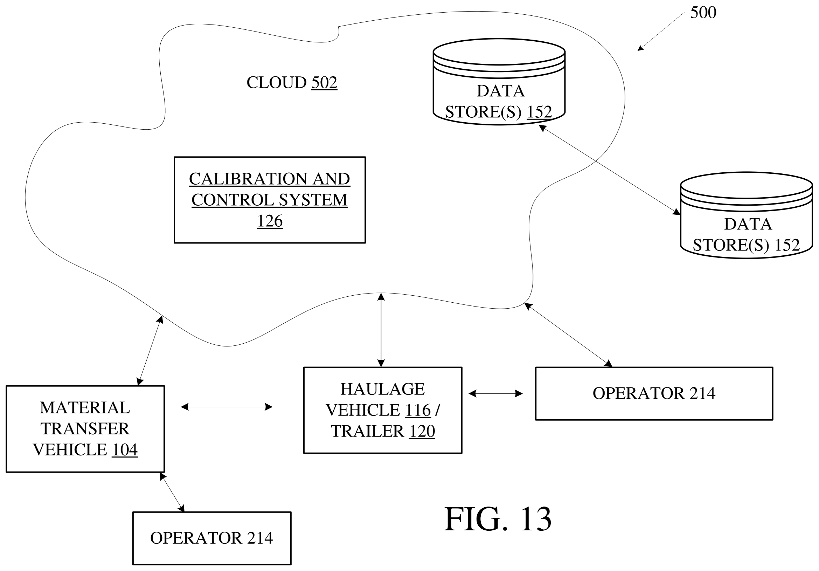

FIG. 13 is a block diagram of agricultural system 100, shown in previous FIGs., except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver services over a wide area network, such as the internet, using appropriate protocols. For instance, remote servers can deliver applications over a wide area network, and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 13, some items are similar to those shown in previous FIGS. and they are similarly numbered. FIG. 13 specifically shows that calibration and control system 126, and data store 152 can be located at a remote server location 502. Therefore, machines 102, 104, 116 access those systems through remote server location 502.

FIG. 13 also depicts another example of a remote server architecture. FIG. 13 shows that it is also contemplated that some elements of previous FIGS are disposed at remote server location 502 while others are not. By way of example, date storage 152 can be disposed at a location separate from location 502, and accessed through the remote server at location 502. Regardless of where the items are located, they can be accessed directly by items in agricultural system 100, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

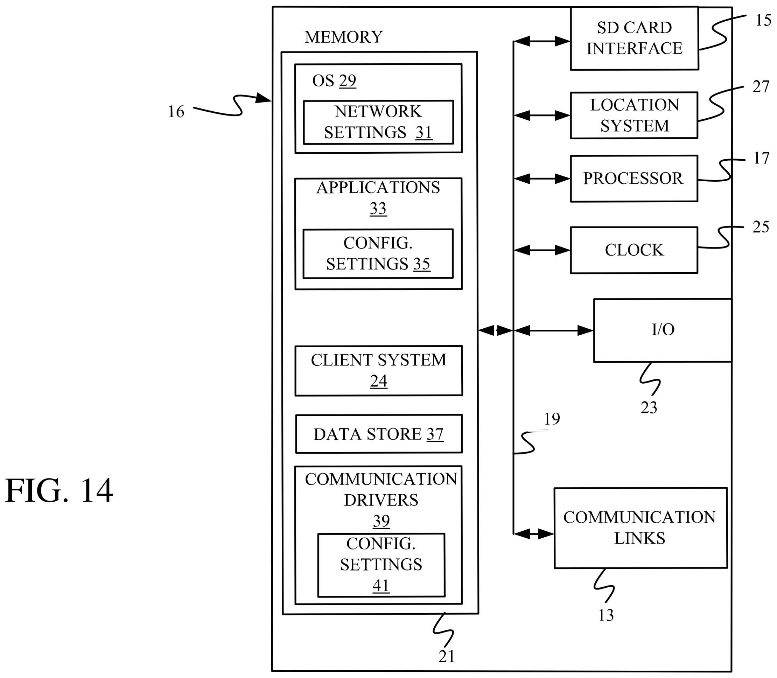

FIG. 14 is a simplified block diagram of one illustrative example of a handheld or mobile computing device that can be used as a user's or client's handheld device 16, in which the present system (or parts of it) can be deployed. For instance, a mobile device can be deployed in the operator compartment of any of the machines in agricultural system 100 for use in generating, processing, or displaying the calibration data. FIGS. 12-14 are examples of handheld or mobile devices.

FIG. 14 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

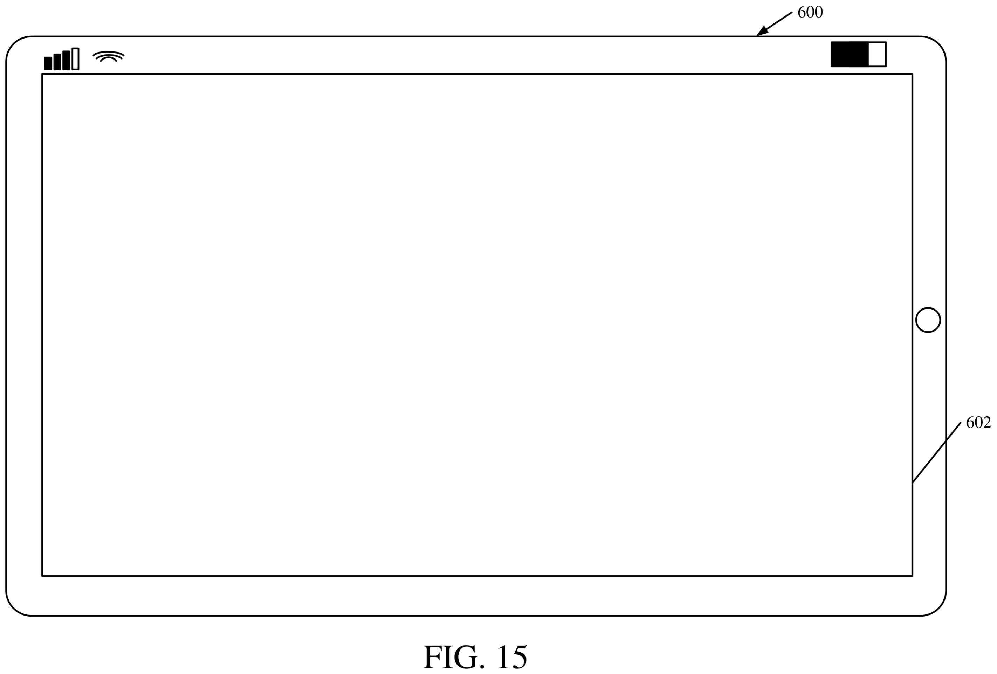

FIG. 15 shows one example in which device 16 is a tablet computer 600. In FIG. 15, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

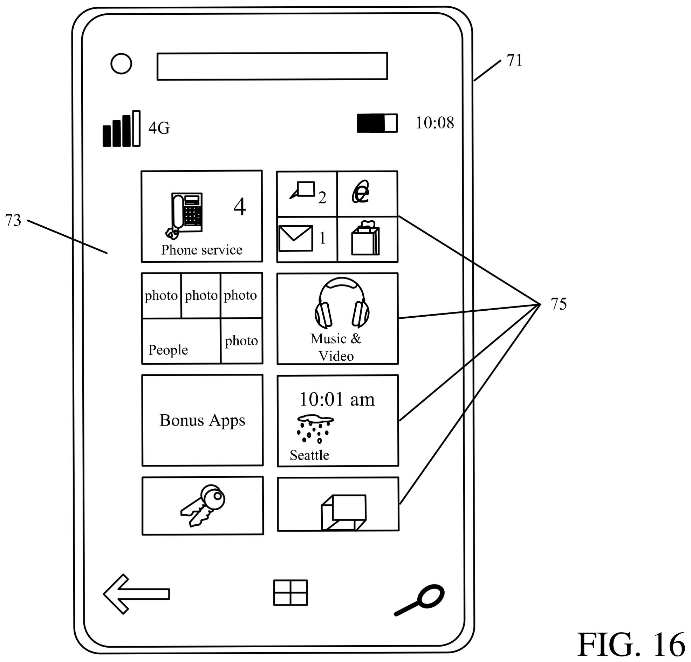

FIG. 16 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

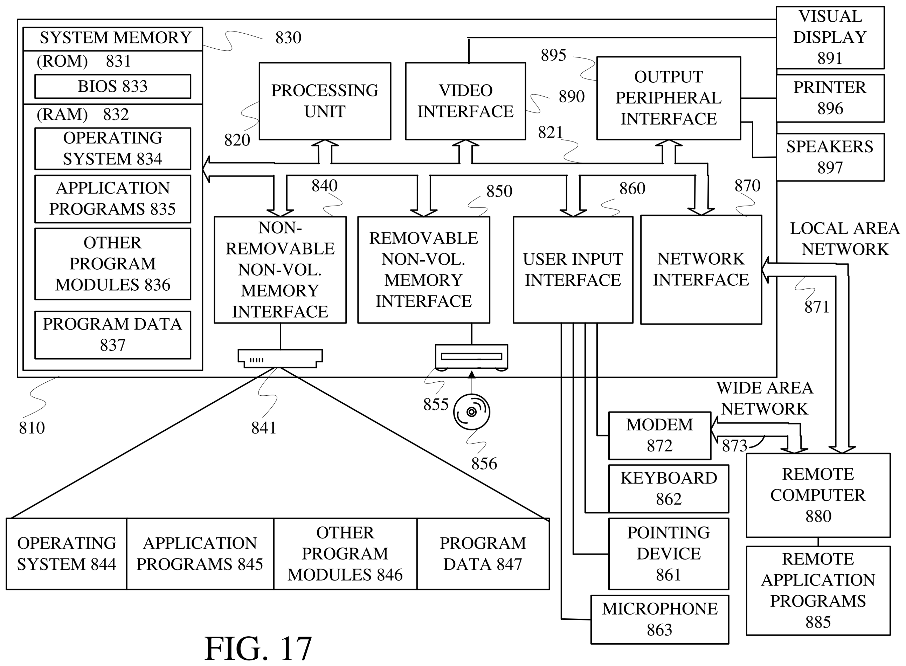

FIG. 17 is one example of a computing environment in which elements of previous FIGS., or parts of it, (for example) can be deployed. With reference to FIG. 17, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 17.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 17 illustrates operating system 834, application programs 835, other program modules 836, and program data 837.

The computer 810 may also include other removable/non-removable volatile/nonvolatile computer storage media. By way of example only, FIG. 17 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 15, provide storage of computer readable instructions, data structures, program modules and other data for the computer 810. In FIG. 17, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 17 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

**1.** A computer implemented method, comprising:

controlling (250) an agricultural machine to achieve movement of a vision system sensor that is in a known, fixed orientation relative to an inertial measurement unit (IMU);
detecting (260) an output signal from the IMU;
generating (264) a calibration value indicative of an orientation of the vision system sensor relative to a reference point in a coordinate system corresponding to the agricultural machine based on the output signal from the IMU; and
generating (266) a control signal based on the calibration value.

2. The computer implemented method of claim 1 wherein generating a calibration value comprises:

generating a pitch angle indicative of a pitch of the vision system sensor relative to the reference point based on the output signal from the IMU; and
generating a roll angle indicative of a roll of the vision system sensor relative to the reference point based on the output signal from the IMU.

3. The computer implemented method of claim 2 wherein generating a calibration value comprises:
generating a yaw angle indicative of a yaw of the vision system sensor relative to the reference point based on the output signal from the IMU during the movement of the vision system sensor.

4. The computer implemented method of claim 1 wherein generating a calibration value comprises:

detecting an orientation of the agricultural machine relative to gravity; and
computing the orientation of the vision system sensor relative to the reference point in the coordinate system corresponding to the agricultural machine based on the orientation of the agricultural machine.

5. The computer implemented method of claim 3 wherein controlling the agricultural machine to achieve movement comprises:
controlling the agricultural machine to accelerate in a straight line.

6. The computer implemented method of claim 1 wherein the vision system sensor and the IMU are mounted to a movable element that is movable relative to a frame of the agricultural machine and wherein controlling the agricultural machine to achieve movement of the vision system sensor comprises:
controlling the movable element to move through a range of motion.

7. The computer implemented method of claim 6 wherein detecting the output signal from the IMU comprises:

detecting an acceleration signal at a beginning of the movement of the movable element; and
detecting an acceleration signal at an end of the movement of the movable element.

8. The computer implemented method of claim 6 wherein controlling the agricultural machine to achieve movement of the vision system sensor comprises:

controlling the agricultural machine to move at a first speed; and
controlling the movable element to move to a first position wherein detecting the output signal from the IMU comprises detecting a first average IMU signal value over a first time period during movement of the agricultural vehicle at the first speed and with the movable element in the first position.

9. The computer implemented method of claim 8 wherein controlling the agricultural machine to achieve movement of the vision system sensor comprises:
controlling the movable element to move to a second position wherein detecting the output signal from the IMU comprises detecting a second average IMU signal value over a second time period during movement of the agricultural vehicle at the first speed and with the movable element in the second position.

10. The computer implemented method of claim 9 wherein generating a calibration value comprises:
calculating first pitch and roll angles corresponding to the vision system sensor when the movable element is in the first position based on the first average IMU signal value.

11. The computer implemented method of claim 10 wherein generating a calibration value comprises:
calculating second pitch and roll angles corresponding to the vision system sensor when the movable element is in the second position based on the second average IMU signal value.

12. The computer implemented method of claim 11 wherein generating a yaw angle comprises:
calculating the yaw angle based on the first pitch and roll angles and based on the second pitch and roll angles.

13. The computer implemented method of claim 12 wherein calculating the yaw angle comprises:

calculating the relative rotations between the first pitch and roll angles and the second pitch and roll angles; and generating the yaw angle based on the relative rotations.

14. The computer implemented method of claim 1 wherein the IMU on the vision system sensor comprises a vision system IMU, wherein the vision system sensor is mounted on a movable element, wherein controlling the agricultural machine to achieve movement of the vision system sensor comprises moving the movable element from a first position to a second position, wherein detecting an output signal from the IMU comprises:

recording first pairs of IMU measurements from a machine IMU mounted at a known location on the mobile agricultural machine and the vision system IMU when the movable element is in the first position; and recording second pairs of IMU measurements from the machine IMU and the vision system IMU when the movable element is in the second position, and wherein generating the calibration value comprises generating the calibration value based on the first pairs of IMU measurements and the second pairs of IMU measurements.

15. An agricultural system (100), comprising:

a mobile agricultural machine (102, 104, 106) having a machine frame;
a vision system sensor (122) mounted to the mobile agricultural machine;
an inertial measurement unit (IMU) mounted in a fixed, known orientation (234) relative to the vision system sensor;
a movement control processor (188) configured to generate a movement signal indicative of a commanded movement of the vision system sensor;
an IMU signal processor (182) configured to detect an output signal from the movement control processor;
a vision sensor calibration system (172) configured to generate an orientation output indicative of an orientation of the vision system sensor relative to a coordinate system corresponding to the agricultural machine based on the output signal from the IMU; and
a control signal generator (176) configured to generate a control signal based on the orientation output.

FIG. 1

FIG. 2

FIG. 3

FIG. 4

FIG. 5

EP 4 748 213 A1

**Calibration and control system 126**

Processor (s) / servers 150

**Data store 152**
- Machine dimensions 154
- Machine characteristics 156
- Calibration value 158
- Other 160

**Sensor 162**
- Position sensor 164
- Vision system sensor With assoiated IMU 122
- Other 166

Communication System 168

Operator interface System 170

Operator 214

**Vision sensor calibration system 172**
- IMU signal processor 182
- Movement control processor 184
- Pitch and roll detection System 186
- Yaw detection system 188
- Calibration output System 190
- Other 192

Sensor-based processing And control system 174

Other functionality 180

**Control signal generator 176**
- Operator interface Control system 194
- **Movement control system (s) 196**
  - Movable element Controller 200
  - Machine Controller 202
  - Other 204
- Other 198

**Other controllable system(s) 178**
- Propulsion System 206
- Steering System 208
- Movable element Actuator 210
- Other 212

FIG. 6

EP 4 748 213 A1

**Start**

A mobile machine has a vision system Sensor mounted on it 220

- Camera(s) 224
- Radar 226
- Lidar 228
- Other 230

Vision system sensor has an integrated Internal measurement unit (IMU) 232

- IMU is mounted to the Sensor fixedly 234
- IMU has a fixed Known transformation Or no transformation With respect to the Camera 236
- Other 238

Obtain any needed mobile machine Characteristics 240

- Offset of vision System to a reference point On the machine (E.G. GNSS Receiver) 242
- Position of a movable element (E.G auger) on Which the vision Sensor system is Mounted relative To an axis of The mobile Machine 244
- Swing angle(s) Of the movable Element 246
- Other 248

Control the mobile machine to achieve Movement of the vision system sensor And the attached IMU 250

- Accelerate the Mobile machine 252
- Move a movable Element on which the Vision system sensor And IMU are mounted 254
- Move the mobile Machine at a constant Rate and move the Movable element 256
- Other 258

Detect or obtain orientation of the Mobile machine relative to gravity 260

- Using GNSS Receiver 164
- Other sensor 262

Generate pitch, roll, and yaw calibration Angles of the vision system sensor Relative to the reference point or Coordinate system on the mobile Machine based on the IMU readings During the machine movement 264

Use the calibration angles for machine/ System control 266

**End**

FIG. 7

```
                        ┌─────────┐
                        │  Start  │
                        └────┬────┘
                             │
                             ▼                              ┌──────────────────┐
        ┌────────────────────────────────────┐             │ Prompt/instruct the │
        │ Compute pitch and roll angles based on │           │   Operator 272     │
        │ Gravity vector relative to the 3-axis IMU 268 │      └──────────────────┘
        └────────────────────┬───────────────┘
                             │                              ┌──────────────────┐
                             ▼                              │ Automatic control │
        ┌────────────────────────────────────┐             │       274         │
        │ Control the mobile machine to accelerate in │─────└──────────────────┘
        │ A straight line 270                 │
        └────────────────────┬───────────────┘             ┌──────────────────┐
                             │                              │ On level ground   │
                             ▼                              │ Or accounting for │
        ┌────────────────────────────────────┐             │ Machine tilt 272  │
        │ Detect the average acceleration vector as │       └──────────────────┘
        │ The vechile accelerates 282         │
        └────────────────────┬───────────────┘             ┌──────────────────┐
                             │                              │ Provide acceleration │
                             ▼                              │   Timer 278       │
        ┌────────────────────────────────────┐             └──────────────────┘
        │ Project the average acceleration vector onto │
        │ Planes defined by the 3 axes 284    │            ┌──────────────────┐
        └────────────────────┬───────────────┘             │   Other 280      │
                             │                              └──────────────────┘
                             ▼
        ┌────────────────────────────────────┐
        │ Compute (or lookup) yaw angle based on the │
        │ Projected acceleration vector 286   │
        └────────────────────┬───────────────┘
                             │
                             ▼
                        ┌─────────┐
                        │   End   │
                        └─────────┘
```

FIG. 8

```
                    ┌─────────┐
                    │  Start  │
                    └─────────┘
                         │
                         ▼
      ┌──────────────────────────────────────┐
      │ Vision system sensor and IMU are      │
      │ mounted On a movable element 288      │
      └──────────────────────────────────────┘
                         │
                         ▼
      ┌──────────────────────────────────────┐
      │ Compute pitch and roll angles 290     │
      └──────────────────────────────────────┘
                         │
                         ▼
      ┌──────────────────────────────────────┐
      │ Control an actuator to move the       │
      │ movable Element from a first position │
      │ to a second Position 292              │
      └──────────────────────────────────────┘
                         │
                         ▼
      ┌──────────────────────────────────────┐
      │ Detect the IMU accelerartion vector   │
      │ (impulse) at the start and end of the │
      │ movement or Radial acceleration for   │
      │ arcuate path 294                      │
      └──────────────────────────────────────┘
                         │
                         ▼
      ┌──────────────────────────────────────┐
      │ Compute (or lookup) the yaw angle 296 │──────┐
      └──────────────────────────────────────┘      │
                         │                           │
                         ▼                           │
                    ┌─────────┐                      │
                    │   End   │                      │
                    └─────────┘                      │
```

Compute (or lookup) yaw relative to the Moveable element and Use other information to Compute yaw relative to Reference point 298

Compute (or lookup) yaw relative to the Reference point Directly 300

Other 302

FIG. 9

Start

Vision system sensor and IMU are mounted
On a movable element 304

Control the mobile machine to move at a
constant speed 306

Control and actuator to move the
Movable element to a first position 308

→ Auger swing to travel
Or deployed position 310

→ Other 312

Detect IMU readings averaged over a
first time period 314

→ Minutes 316

→ Other 318

Compute a first set of pitch and roll angles
With the movable element in the first
Position 320

Control an actuator to move the movable
Element to a second position 322

→ Auger swing to travel
Or deployed position 324

→ Other 326

Detect IMU readings averaged over a
second time period 328

→ Same as /different from
First time period 330

→ Other 332

Detect IMU readings averaged over a
second time period 328

Compute a second set of pitch and roll
Angles with the movable element in the
Second position 334

Calculate the relative rotations between
The first and second set of pitch and roll
Angles 336

Calculate the yaw angle based on
The relative rotations 336

End

FIG. 10

Start

Stop movement of the mobile machine **340**

Automatic control **258**

Prompt operator **258**

Other **258**

Control the movable element (E.G., the auger) to move the movable element to a stored position **341**

Aggregate (E.G., average) the vision system IMU measurements for a time period (E.G., 15s) **348**

Aggregate (E.G., average) the mobile machine IMU measurements for the time period (E.G., 15s) **350**

Automatic control **258**

Prompt operator **258**

Other **258**

Control the movable element to move the movable element to a deployed position **352**

Aggregate (E.G., average) the vision system IMU measurements for a time period (E.G., 15s) **360**

Aggregate (E.G., average) the mobile machine IMU measurements for the time period (E.G., 15s) **362**

Compute a rotation that best aligns the sets of aggregated measurements **366**

Using procrustes function **366**

Other **366**

Compute a representation of the orientation(roll, pitch, yaw) of the vision system based on the aggregated measurements **362**

End

# FIG. 11

Start

Turn mobile machine on 372

Record vision system IMU
measurements and mobile
machine IMU measurements
in pairs 374

Time duration
is not fixed 376

Machine may be in
general use 378

Other 380

For each pair, record the
position of the movable
element 382

Compute the orientation (roll,
pitch, yaw) representation of the
rotation that best aligns each
vision system IMU
measurements to its paired
mobile machine IMU
measurements (accounting for
the movable element swing
rotation-E.G., accounting for
auger swing rotation if the auger
is stored when the
measurement pair was taken)
384

End

FIG. 12

FIG. 13

FIG. 14

FIG. 15

FIG. 16

FIG. 17

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 790 539 B1 (ANAGNOSTOPOULOS TRENTON [US]) 17 October 2023 (2023-10-17)<br>* column 25, line 46 - column 28, line 10 *<br>* claims 1-23 *<br>* figures 1-35 *<br>----- | 1-15 | INV.<br>A01B69/00<br>A01B76/00<br>G06T7/70 |
| A | US 2021/327092 A1 (JIANG LEAF ALDEN [US] ET AL) 21 October 2021 (2021-10-21)<br>* paragraph [0010] *<br>* paragraph [0062] - paragraph [0074] *<br>----- | 1-15 | |
| A | US 2023/401748 A1 (GANGULI ANURAG [US] ET AL) 14 December 2023 (2023-12-14)<br>* paragraph [0016] - paragraph [0016] *<br>----- | 1-15 | |
| | | | TECHNICAL FIELDS SEARCHED (IPC)<br><br>A01B<br>G06T<br>A01D |

The present search report has been drawn up for all claims

| Place of search | Date of completion of the search | Examiner |
|---|---|---|
| Munich | 23 March 2026 | Van Woensel, Gerry |

EPO FORM 1503 03.82 (P04C01)

## ANNEX TO THE EUROPEAN SEARCH REPORT
## ON EUROPEAN PATENT APPLICATION NO.

EP 25 20 9019

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | | Publication date | Patent family member(s) | | Publication date |
|---|---|---|---|---|---|
| US 11790539 | B1 | 17-10-2023 | US | 11315258 B1 | 26-04-2022 |
| | | | US | 11790539 B1 | 17-10-2023 |
| US 2021327092 | A1 | 21-10-2021 | EP | 4094433 A1 | 30-11-2022 |
| | | | JP | 7319003 B2 | 01-08-2023 |
| | | | JP | 7597405 B2 | 10-12-2024 |
| | | | JP | 2023133334 A | 22-09-2023 |
| | | | JP | 2023504298 A | 02-02-2023 |
| | | | KR | 20220123726 A | 08-09-2022 |
| | | | KR | 20230104298 A | 07-07-2023 |
| | | | US | 2021327092 A1 | 21-10-2021 |
| | | | US | 2021350576 A1 | 11-11-2021 |
| | | | US | 2021352259 A1 | 11-11-2021 |
| | | | US | 2023005184 A1 | 05-01-2023 |
| | | | US | 2024242382 A1 | 18-07-2024 |
| | | | WO | 2021150369 A1 | 29-07-2021 |
| US 2023401748 | A1 | 14-12-2023 | US | 11763492 B1 | 19-09-2023 |
| | | | US | 2023401748 A1 | 14-12-2023 |

For more details about this annex : see Official Journal of the European Patent Office, No. 12/82